# EUROPÄISCHE PATENTANMELDUNG

(11) **EP 0 789 336 A2**
(43) Veröffentlichungstag der Anmeldung: **13.08.1997**
(21) Anmeldenummer: 97100722.4
(22) Anmeldetag: 17.01.1997
(51) Int. Cl.: G07F 7/10

(54) **Verfahren zur Transaktionskontrolle elektronischer Geldbörsensysteme**

(30) Priorität: 10.02.1996 DE 19604876
(71) Anmelder: Deutsche Telekom AG, 53113 Bonn (DE)
(72) Erfinder: Korst, Uwe K.H., 64625 Bensheim (DE)

(57) **Zusammenfassung**

Es wird ein Verfahren zur Transaktionskontrolle elektronischer Geldbörsensysteme in Form von Speicherchip- oder Mikroprozessorkarten (Karten) mit mindestens einem Identifikationsbereich und einem Zählerbereich beschrieben, wobei durch das abbuchende Terminal vor einer Transaktion jeweils mittels einer Authentifikation geprüft wird, ob die Karte authentisch ist. Bei einem Abbuchungsvorgang wird von der Karte neben einem Identifikationsbereich und einem Zählerbereich auch ein weiterer Speicherbereich ausgelesen, der einen integritätsgeschützten Transaktionszähler beinhaltet, der nach einem erfolgreichen Abbuchungsvorgang in dem Terminal um den Wert 1 erhöht, mit einem Integritätsschutz versehen, an die Karte übertragen und dort in den Speicherbereich, der den integritätsgeschützten Transaktionszähler beinhaltet, eingeschrieben wird. Zur Integritätsprüfung, zur Erhöhung des Transaktionszählers sowie zum Erstellen einer neuen Integritätsinformation wird ein Sicherheitsmodul eingesetzt. In einem Terminal bzw. in einem Hintergrundsystem werden die Transaktionszähler auf Plausibilität geprüft, wobei jeder Transaktionszählerstand nur einem im System vorhanden sein darf. Bei Erkennen eines doppelten Transaktionszählers mit dem gleichen Zählerstand, werden die entsprechenden Karteninformationen auf einer Sperrdatei gespeichert und die Karte wird sofort ungültig gemacht oder automatisch eingezogen.

## Beschreibung

Die Erfindung betrifft ein Verfahren zur Transaktionskontrolle elektronischer Geldbörsensysteme nach dem Oberbegriff des Patentanspruchs 1.

Konzepte für das Betreiben von elektronischen Geldbörsen auf Chipkarten befinden sich bereits seit einigen Jahren in der Entwicklung. Sie beinhalten neben der Technik der Chipkarte in den meisten Fällen auch die Sicherheitstechnik für das Zusammenwirken von Chipkarte und Rechner- und Übertragungssystemen sowie die Abrechnung der mit der Chipkarte vorgenommenen Transaktionen. Sowohl national als auch international wurden bereits zahlreiche Konzepte vorgestellt. In einigen Ländern sind bereits elektronische Geldbörsensysteme in Feldversuchen oder gar im Wirkbetrieb eingesetzt, wie zum Beispiel
- Feldversuch Eisenstadt, Österreich seit Dezember 1994
- Avant-Card in Finnland
- Danmont Konzept in Dänemark
- Mondex, in Swindon, England
- Darüberhinaus wird unter CEN TC224 WG10 eine "Intersektor electronic purse" (branchenübergreifende elektronische Geldbörse) standardisiert.

Die Abrechnung erfolgt in den bekannten Systemen nach dem folgenden Verfahren: Der erste Schritt ist das Laden von geldwerten Einheiten in die Chipkarte, wobei der Gegenwert, den der Karteninhaber in bar oder auch bargeldlos bezahlen muß, auf einem sogenannten "Poolkonto" des Börsenbetreibers hinterlegt wird. Bezahlt ein Karteninhaber anschließend mit seiner Chipkarte, werden geldwerte Einheiten aus der elektronischen Geldbörse herausgebucht und mit Hilfe eines Sicherheitsmodules zum Terminal des Serviceanbieters übertragen. Dort werden die eingenommenen geldwerten Einheiten entweder zu einem Betrag akkumuliert und mit dem Börsenbetreiber abgerechnet oder aber jeder einzelne Bezahlvorgang wird beim Börsenbetreiber zur Abrechnung eingereicht. Akkumulierte Beträge oder Einzeldatensätze werden entweder auf einer sogenannten Händlerkarte gesammelt, die der Serviceanbieter einreichen muß oder mit einem entsprechend ausgerüsteten Terminal on-line an eine Abrechnungsstelle übertragen. Die größte Verbreitung haben Telefonkarten. Telefonkarten sind Speicherchipkarten mit einem Identifikationsbereich und mindestens einem Zählerbereich. Weiterhin sind elektronische Geldbörsenanwendungen bekannt, die auf einer Mikroprozessorkarte realisiert sind. Bei Mikroprozessoranwendungen erfolgt die Steuerung der Anwendung durch ein Chipkartenbetriebssystem, wie es beispielsweise im Standard prEN726-3 definiert ist. Auch diese Anwendung zeichnet sich dadurch aus, daß auf der Karte Geldbeträge gespeichert werden, die bei jeder Abbuchung um einen festgelegten Betrag reduziert werden. Der Vorteil der Mikroprozessorkarten gegenüber der Speicherkarten besteht darin, daß die Mikroprozessorkarten prüfen können, ob das abbuchende System authentisch ist. Diese Überprüfung ist bei einer Speicherchipkarte nicht möglich. Außerdem sind ähnliche Systeme und Verfahren durch die US-A-4,859,837, WO-A-90 15 382 und die deutsche Patentanmeldung P 42 43 851.9 bekanntgeworden.

Eine Chipkarte für Bezahlvorgänge enthält neben verschiedenen Datenbereichen wie zum Beispiel für Seriennummern auch als Zähler ausgebildete bzw. verwendete Speicherbereiche.

Die Speicherchipkarten werden auf Authentizität zum Beispiel durch Anwendung bekannter Challenge-Response Verfahren geprüft, wie in Absatz 4.1.2.1, ab Seite 61 des Buches "Chipkarten als Werkzeug" von Beutelsberger, Kersten und Pfau beschrieben. Hierzu werden die Daten des Speicherchips ausgelesen. Mit diesen Chipdaten ist es mit einem Terminal möglich, die Karte zu identifizieren und auf Plausibilität zu prüfen. In einem im Terminal eingebauten Sicherheitsmodul wird eine Authentifikation durchgeführt. Hierzu erhält das Sicherheitsmodul die Chipdaten und errechnet hierzu aufgrund eines Systemschlüssels einen in der Speicherchipkarte abgespeicherten individuellen Schlüssel.

Bei den derzeitig eingesetzten Chipkarten wird die Echtheit der Chipkarten geprüft. Die Überprüfung der Echtheit schließt Speicherbereiche ein, die für die Identifikation, für die Authentifikation sowie für eine Zählfunktion benötigt werden. Diese Echtheitsprüfung erfolgt mittels bekannter kryptografischer Funktionen in einem Sicherheitsmodul. Im Rahmen der Echtheitsprüfung erhält das Sicherheitsmodul die Speicherbereiche. Bestandteil dieses Speicherbereiches ist ein Zählerstand. Die Dekrementierung des Zählerbereiches erfolgt durch ein Terminal. Danach hat das Sicherheitsmodul die Möglichkeit erneut die Echtheit der Chipkarte zu überprüfen.

Da zwischen den Authentifikationen die Kontrolle, ob die gleiche Karte immer noch im Endgerät vorhanden ist, vom Terminal erfolgt und dem Sicherheitsmodul nicht bekannt ist, ist es so einem Sicherheitsmodul nicht möglich, eine eindeutige Differenz zwischen dem bekannten Zählerstandes in der Chipkarte aufgrund einer ersten Authentifikation sowie eines Zählerstandes aufgrund einer folgenden Authentifikation zu ermitteln.

Der Erfindung liegt die Aufgabe zugrunde, ein Verfahren zur Transaktionskontrolle elektronischer Geldbörsensysteme in Form von Speicherchipkarten oder Mikroprozessorkarten zu schaffen, das manipulierte Chipkarten sicher und auf technisch einfache Weise erkennt und automatisch unschädlich macht.

Die erfindungsgemäße Lösung für das Verfahren besteht insbesondere im Kennzeichen des Patentanspruchs 1 bzw. in der Lösung gemäß Kennzeichen des Patentanspruchs 3.

Weitere Ausgestaltungen sind in den Kennzeichen der Patentansprüche 2, 4, 5 und 6 angegeben.

Mit Hilfe dieses Verfahrens, insbesondere durch die Einführung und Anwendung des integritätsgeschützten Transaktionszählers ist es möglich, gegebenenfalls mit Sicherheitsmodul, die gewünschte Sicherheit zu erreichen.

Anhand der nachfolgenden Beschreibung eines Ausführungsbeispiels wird das Verfahren näher beschrieben. Um feststellen zu können, ob keine manipulierten Chipkarten als elektronische Geldbörsen eingesetzt werden, wird auf der elektronischen Geldbörse (Karte) ein Transaktionszähler eingeführt. Bei jeder erfolgreich durchgeführten Transaktion wird ein Transaktionszähler auf der Karte um den Wert 1 erhöht. Alle Transaktionen werden im Terminal gespeichert und gegebenenfalls an ein Hintergrundsystem übertragen. Bei einer erneuten Nutzung der Karte prüft das Hintergrundsystem den Transaktionszähler auf Plausibilität, das heißt es dürfen keine doppelten Transaktionszähler mit dem gleichen Wert in dem System vorhanden sein. Ein doppelter Transaktionszähler weist auf eine manipulierte bzw. duplizierte Karte hin. Bei einer Erkennung eines solchen Mißbrauchs ist die Karte deshalb sofort automatisch zu zerstören oder einzuziehen und/oder auf einer Sperrdatei zu vermerken, um die Karte automatisch einzubehalten oder bei einer Folgenutzung abzuweisen oder zu zerstören. Der Transaktionszähler wird in einem Speicherbereich in der Karte abgespeichert. Gegen Veränderung wird dieser Zähler integritätsgeschützt. Die Prüfung, ob der Zähler integer ist, erfolgt entweder durch das Terminal oder durch ein Sicherheitsmodul. Eine Erhöhung des Transaktionszählers und somit eine neue Transaktion ist nur dann möglich, wenn die Integrität des aktuellen Zählerstandes geprüft wurde. Bei vorher festgestellten, im Terminal abgespeicherten Kriterien erfolgt eine Anfrage im Hintergrundsystem, ob eine weitere Transaktion erfolgen kann.

Das Verfahren zur Transaktionskontrolle elektronischer Geldbörsensysteme benutzt Speicherchip- oder Mikroprozessorkarten (Karten) mit mindestens einem Identifikationsbereich und einem Zählerbereich, wobei durch das abbuchende Terminal vor einer Transaktion jeweils mittels einer Authentifikation geprüft wird, ob die Karte authentisch ist. Bei einem Abbuchungsvorgang von der Karte wird neben einem bekannten Identifikationsbereich und einem bekannten Zählerbereich auch der weitere Speicherbereich ausgelesen, der den integritätsgeschützten Transaktionszähler beinhaltet, der nach einem erfolgreichen Abbuchungsvorgang in dem Terminal um den Wert 1 erhöht, mit einem Integritätsschutz versehen, an die Karte übertragen und dort in den Speicherbereich der den integritätsgeschützten Transaktionszähler beinhaltet, eingeschrieben wird. In einem Terminal bzw. in einem Hintergrundsystem werden die Transaktionszähler auf Plausibilität geprüft, wobei jeder Transaktionszählerstand nur einmal im System vorhanden sein darf.

## Patentansprüche

1. Verfahren zur Transaktionskontrolle elektronischer Geldbörsensysteme in Form von Speicherchip- oder Mikroprozessorkarten (Karten) mit mindestens einem Identifikationsbereich und einem Zählerbereich, wobei durch das abbuchende Terminal vor einer Transaktion jeweils mittels einer Authentifikation geprüft wird, ob die Karte authentisch ist, dadurch gekennzeichnet,
daß bei einem Abbuchungsvorgang von der Karte neben einem Identifikationsbereich und einem Zählerbereich auch ein weiterer Speicherbereich ausgelesen wird, der einen integritätsgeschützten Transaktionszähler beinhaltet, der nach einem erfolgreichen Abbuchungsvorgang in dem Terminal um den Wert 1 erhöht, mit einem Integritätsschutz versehen, an die Karte übertragen und dort in den Speicherbereich, der den integritätsgeschützten Transaktionszähler beinhaltet, eingeschrieben wird.

2. Verfahren nach Patentanspruch 1, dadurch gekennzeichnet,
daß zur Integritätsprüfung, zur Erhöhung des Transaktionszählers sowie zum Erstellen einer neuen Integritätsinformation ein Sicherheitsmodul eingesetzt wird.

3. Verfahren nach Patentanspruch 1 oder 2, dadurch gekennzeichnet,
daß in einem Terminal bzw. in einem Hintergrundsystem die Transaktionszähler auf Plausibilität geprüft werden, wobei jeder Transaktionszählerstand nur einmal im System vorhanden sein darf.

4. Verfahren nach Patentanspruch 3, dadurch gekennzeichnet,
daß bei Erkennen eines doppelten Transaktionszählers mit dem gleichen Zählerstand, die entsprechenden Karteninformationen auf einer Sperrdatei gespeichert werden.

5. Verfahren nach Patentanspruch 4, dadurch gekennzeichnet,
daß bei Erkennen der gesperrten Karte diese sofort ungültig gemacht oder automatisch eingezogen wird.

6. Verfahren nach Patentanspruch 1 oder 2, dadurch gekennzeichnet,
daß bei Vorliegen vorher definierter Kriterien im Terminal eine On-Line-Anfrage im Hintergrundsystem erforderlich wird.
